# FASCICULE DE BREVET EUROPEEN

(11) **EP 1 019 775 B1**
(45) Date de publication et mention de la délivrance du brevet: **24.07.2002**
(21) Numéro de dépôt: 98947633.8
(22) Date de dépôt: 08.10.1998
(51) Int. Cl.: G02B 27/01, G02B 17/06

(54) **DISPOSITIF OPTIQUE POUR VISEUR DE CASQUE COMPORTANT UN MIROIR DE MANGIN**
OPTISCHE VORRICHTUNG FÜR HELMVISIER MIT EINEM MANGINSPIEGEL
OPTICAL DEVICE FOR HELMET VISOR COMPRISING A MANGIN MIRROR

(30) Priorité: 10.10.1997 FR 9712681
(43) Date de publication de la demande: 19.07.2000
(73) Titulaire: THALES AVIONICS S.A., 78141 Vélizy Villacoublay Cédex (FR)
(72) Inventeur: POTIN, Laurent, Thomson-CSF PI., Dept.Brevets, 94117 Arcueil Cedex (FR); BIGNOLLES, Laurent, Thomson-CSF PI,Dept.Brevets, 94117 Arcueil Cedex (FR)
(74) Mandataire: Guérin, Michel
(86) Numéro de dépôt international: FR9802157
(87) Numéro de publication internationale: WO9919757

(56) Documents cités:
- EP-A- 0 531 121
- WO-A-95/13012
- US-A- 4 026 641
- US-A- 4 729 634
- US-A- 4 783 725
- US-A- 5 159 495
- US-A- 5 293 271
- US-A- 5 661 604

## Description

La présente invention concerne un dispositif optique de correction d'aberrations affectant une image. En particulier, un dispositif selon l'invention permet de corriger la distorsion due à un miroir concave sphérique incliné par rapport à la direction sous laquelle ce miroir est observé.

L'invention s'applique notamment, mais non exclusivement, à un viseur de casque pour pilote d'avion ou d'hélicoptères d'armes ou pour opérateur d'un simulateur d'entraînement.

Un viseur de casque est un dispositif de présentation d'images intégré à un casque. Le viseur permet au porteur du casque, comme par exemple un pilote d'avion en vol, d'observer des informations visuelles simultanément à la vue du paysage, ou du poste de pilotage, qu'il perçoit le plus souvent à travers une visière de protection.

La présentation d'informations adaptées, par exemple sous forme de symboles, permet une aide au pilotage et à la navigation. Ainsi pour des véhicules armés la présentation d'un réticule réalise une aide à la visée d'une arme.

Les informations peuvent aussi consister en une image du paysage acquise par des capteurs différents de l'oeil du porteur du casque comme des capteurs d'image infrarouge ou des intensificateurs de lumière pour compléter ou remplacer la vue directe.

A l'intérieur du casque, un générateur d'image comporte un imageur dont l'écran, par exemple un écran de tube cathodique ou un écran à cristaux liquides, permet d'afficher une image.

L'image est le plus souvent transportée à l'aide d'une optique de relais jusqu'à un combineur qui assure une présentation de l'image transportée en superposition à la vue du paysage.

Pour permettre au pilote une observation simultanée du paysage vu directement à l'infini et de l'image de l'imageur, cette dernière est aussi focalisée à l'infini par une optique de collimation.

Lorsque le combineur est formé d'une simple lame plane semi-réfléchissante, la collimation de l'image peut être réalisée par une optique placée entre l'imageur et le combineur; une telle réalisation de l'art antérieur présente l'inconvénient principal de nécessiter une optique de collimation trop encombrante relativement au champ de vue restreint procuré.

Pour réduire l'encombrement, un combineur présentant une puissance optique a été proposé ; un tel combineur réalise pour son utilisateur à la fois la collimation de l'image et la superposition de l'image collimatée avec la vue du paysage.

L'art antérieur est riche de dispositifs nombreux et variés comportant un combineur à puissance optique. On s'intéresse plus particulièrement aux systèmes de présentation d'images comportant un miroir concave sphérique pour collimater l'image.

Par exemple, D1 = US-A- 4729 634 décrit un système de vision tête haute comportant un miroir de Mangin destiné à la correction de coma et d'astigmatisme.

Un miroir sphérique concave réalise une collimation de qualité moyenne d'une image placée en un point particulier de l'espace situé sur l'axe du miroir et à une distance de celui-ci égale à la moitié de son rayon de courbure. En plaçant un imageur en ce point, l'oeil situé sur l'axe du miroir reçoit des rayons issus de l'imageur après leur réflexion sur le miroir sphérique, ces rayons sont parallèles et conduisent à la perception par l'oeil d'une image collimatée. Si de plus le miroir est semi-réfléchissant, il permet au même oeil d'observer le paysage par transparence. Cependant dans un tel dispositif l'imageur devrait se trouver sur l'axe du miroir sphérique semi-transparent et il masquerait le champ de vue de l'utilisateur.

Pour dégager la vue de l'utilisateur, le miroir sphérique est incliné par rapport à la normale au visage et l'oeil de l'utilisateur n'est plus sur l'axe du miroir. Cette disposition présente l'inconvénient de conduire à une image collimatée affectée d'aberrations optiques, d'excentrement en particulier, qu'il est nécessaire de corriger au moins partiellement.

L'inclinaison du miroir concave sphérique entache l'image collimatée de distorsion, appelée distorsion d'excentrement de seconde espèce, caractérisée par une convergence des verticales et une courbure apparente des horizontales.

Dans un brevet déposé sous le numéro 97 09893 le 1er août 1997 par le demandeur, un miroir asphérique d'une forme adaptée permet une correction de la distorsion d'excentrement de seconde espèce.

La surface particulière du miroir asphérique proposé permet de modifier les rayons lumineux afin de rectifier les effets du miroir concave sphérique sur les horizontales et les verticales de l'image observée et ainsi assurer une correction de la distorsion. Cette correction est réalisée par l'introduction par le miroir asphérique d'une distorsion d'excentrement de seconde espèce pour compenser la distorsion de même type due au miroir concave sphérique de collimation utilisé hors axe. L'effet du miroir asphérique conduit à rendre les verticales parallèles et les horizontales rectilignes dans l'image collimatée. L'image est redressée et orthoscopique, mais la forme globale du miroir provoque localement une amplification des aberrations et notamment de l'astigmatisme . La correction de la distorsion que permet cette invention est limitée par une dégradation de la résolution de l'image.

Le problème consiste à réaliser un dispositif de présentation d'images comportant un miroir de collimation non plan incliné, présentant une image collimatée satisfaisante pour l'utilisateur c'est-à-dire dépourvue d'aberrations gênantes et présentant un grand champ de vue supérieur ou égal à 40 degrés. Il s'agit d'obtenir une image collimatée qui présente à la fois une bonne résolution et une bonne correction de la distorsion due à l'inclinaison du miroir de collimation non plan. Pour un miroir de collimation sphérique observé sous un angle oblique par rapport à l'axe du miroir, il s'agit de corriger une distorsion d'excentrement de seconde espèce. Dans cette distorsion, il n'y a pas de symétrie de révolution.

C'est pourquoi l'invention propose un dispositif optique pour système de présentation d'images collimatées à un utilisateur comportant toutes les caractéristiques définies dans la revendication 1.

Le système de présentation d'images comporte un imageur et un miroir de collimation qui renvoie vers l'utilisateur une image sensiblement collimatée sous la forme d'un faisceau de rayons lumineux parallèles. L'invention est tout particulièrement applicable pour un miroir de collimation sphérique incliné par rapport à la direction des rayons collimatés.

Les rayons lumineux issus du centre de l'imageur forment le champ central de l'imageur. L'axe optique du dispositif correspond au trajet du rayon du champ central qui passe par le centre de la pupille de l'utilisateur.

L'axe optique est le plus souvent une ligne brisée. Par exemple, si l'image est présentée à l'utilisateur droit devant lui, la partie de l'axe optique située entre l'oeil et le miroir sphérique est supportée par une première droite normale au centre de la pupille de l'utilisateur, l'axe optique présente une cassure au niveau de l'intersection de cette première droite avec le miroir sphérique incliné, et l'image que le miroir sphérique donne de cette première droite supporte le segment suivant de l'axe optique.

Selon l'invention, un miroir de type MANGIN est placé entre le miroir sphérique et l'imageur. Un tel miroir présente une surface réfléchissante concave, et une couche de matériau réfractant. Les rayons lumineux issus de l'imageur et se dirigeant vers le miroir sphérique traversent d'abord le matériau réfractant puis sont réfléchis sur la surface réféchissante avant de traverser une seconde fois le matériau réfractant. Un miroir de type MANGIN présente une puissance optique différente dans le plan d'incidence de l'axe optique d'une part et dans un plan perpendiculaire d'autre part.

Selon l'invention, ce miroir est incliné par rapport à l'axe optique.

L'épaisseur du matériau réfractant peut varier sur la surface du miroir.

Les caractéristiques d'épaisseur et d'indice optique du matériau réfractant permettent de compenser la dégradation de résolution introduite par la surface réfléchissante corrigeant la distorsion d'excentrement de seconde espèce.

Diverses surfaces permettent de réaliser un miroir selon l'invention, le choix des surfaces dépendant de la distorsion à compenser.

Le miroir de type MANGIN peut comporter une surface réfléchissante asphérique et une surface réfractante sphérique. La surface asphérique est de préférence une surface simple de révolution. Ce peut être un tore, ce peut être une surface engendrée par une parabole ou une ellipse.

Le miroir de type MANGIN peut inversement comporter une surface réfléchissante sphérique et une surface réfractante asphérique. L'image observée est dans ce cas moins sensible aux imperfections de réalisation du miroir.

Un miroir selon l'invention peut même présenter deux surfaces asphériques. Il est alors plus coûteux mais permet d'atteindre un correction globalement meilleure.

Un miroir selon l'invention peut aussi présenter un matériau réfractant dont l'indice varie avec la position sur la surface de miroir.

L'image de la pupille de l'oeil par le miroir sphérique hors axe est la première image pupillaire du dispositif, elle est inclinée par rapport à l'axe optique. De cette première image pupillaire inclinée, le miroir de type MANGIN selon l'invention donne une seconde image pupillaire redressée sur l'axe optique.

Le dispositif comporte également un groupe de puissance placé entre le miroir sphérique et le miroir de type MANGIN.

L'invention permet de conserver une image de bonne résolution tout en assurant une correction poussée de la distorsion due au miroir de collimation incliné. L'invention présente l'avantage de corriger la distorsion de l'image présentée à l'oeil de l'utilisateur pour une pupille instrumentale large, par exemple d'au moins 15 millimètres de diamètre, et pour un champ large typiquement supérieur à 40 degrés. La pupille instrumentale est la zone de l'espace dans laquelle l'utilisateur d'un instrument doit placer la pupille de son oeil pour l'utiliser.

Si l'invention est présentée dans un plan, il est toujours possible, après le positionnement théorique des divers éléments optiques de l'invention, d'ajouter un ou plusieurs miroirs plans qui n'apportent pas d'aberration mais permettent de satisfaire des contraintes d'encombrement par exemple pour que le dispositif soit adapté au contour de la tête de l'utilisateur.

L'invention peut être intégrée à un viseur de casque présentant une pupille instrumentale large et un champ large.

D'autres caractéristiques et avantages de l'invention apparaîtront à la lecture de la description détaillée suivante de réalisations particulières qui sont faites en référence aux dessins annexés suivants dans lesquels les schémas optiques sont représentés dans un plan dit plan de symétrie de l'optique.
- la figure 1 représente schématiquement et partiellement un dispositif optique avec miroir combineur sphérique hors axe optique,
- la figure 2 représente un dispositif selon l'invention dont le miroir de type MANGIN comporte un tore réfléchissant et une sphère réfractante,
- la figure 3 représente un dispositif selon l'invention avec un autre miroir de type MANGIN où une sphère est réfléchissante et un tore est réfractant.

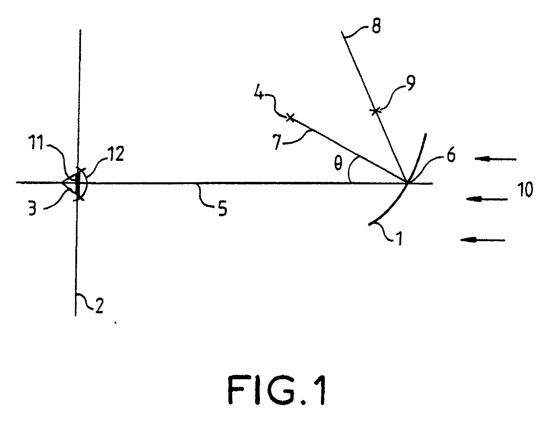

Sur la figure 1, un utilisateur d'un dispositif optique comportant un miroir sphérique 1 est représenté par le plan des pupilles 2 et la droite 5 normale à ce plan 2. La pupille 11 de l'oeil est généralement située optiquement à 3 millimètres en retrait de la cornée 12 de l'oeil 3.

On note qu'en fonction de son orientation par rapport au visage de l'utilisateur, la droite 5 peut correspondre à la vue de l'utilisateur droit devant lui, ou bien à une vue vers le haut, vers le bas, vers un côté ou le côté opposé.

Le miroir sphérique 1 est placé en avant de l'utilisateur, sa concavité est tournée vers l'utilisateur et la surface de ce miroir est au voisinage de son point d'intersection 6 avec la droite 5.

Le miroir sphérique 1 est supporté par une sphère S dont le centre 4 n'appartient pas à cette droite 5. Le plan P de la figure 1 est un plan de l'espace qui contient le centre de la sphère support du miroir sphérique 1 et la droite 5 passant par le centre de la pupille 11 de l'oeil 3. C'est le plan d'incidence de la droite 5 sur le miroir sphérique 1, on l'appelle plan de symétrie de l'optique. Le plus souvent ce plan est confondu avec le plan passant par le centre de la pupille 11 et parallèle au plan de symétrie théorique du visage de l'utilisateur.

La droite 5 et le rayon 7 de la sphère S passant par le point d'intersection 6 sont écartés d'un angle θ. Une valeur non nulle de cet angle θ caractérise une utilisation hors axe du miroir sphérique 1. Le miroir sphérique 1 lui-même est dit "hors axe", il est incliné.

On s'intéresse à un rayon optique 8 qui est symétrique de la droite 5 de l'axe optique par rapport au rayon 7 de la sphère S. En première approximation, une image dont le centre 9 est placé à une distance égale à la moitié du rayon de courbure de la sphère S sur ce rayon optique est perçue par l'oeil 3 de l'utilisateur comme collimatée au premier ordre car les rayons lumineux issus de l'image ainsi placée sont réfléchis par le miroir sphérique 1 en direction de l'oeil 3 sous la forme d'un faisceau de rayons sensiblement parallèles. L'image de centre 9 peut présenter de la courbure de champ.

Cependant la collimation par réflexion sur le miroir sphérique n'est pas parfaite, elle est affectée, en plus des aberrations intrinsèques à ce miroir, d'une aberration optique d'excentrement due à l'utilisation hors axe du miroir sphérique 1.

Divers éléments optiques vont être décrits afin d'obtenir la perception par l'oeil de l'utilisateur d'une image collimatée de bonne qualité, à partir d'une image lumineuse, fournie par un imageur et collimatée par un miroir non plan incliné. Un exemple simple de miroir non plan incliné assurant une collimation est un miroir sphérique incliné.

Le miroir sphérique 1 peut-être semi-transparent. Dans ce cas des rayons lumineux 10 provenant de l'environnement extérieur au miroir sphérique 1, c'est-à-dire venant frapper la face convexe de ce miroir, sont transmis à l'oeil 3 par le miroir sphérique 1. Ce miroir sphérique 1 réalise alors un combineur qui superpose une image collimatée avec la vue directe de l'environnement.

Le champ central est défini comme le faisceau des rayons lumineux issus du centre 9 de l'image à collimater. On considère un rayon lumineux particulier qui appartient au champ central et qui passe par le centre de la pupille de l'utilisateur. Le trajet de ce rayon lumineux est l'axe optique du dispositif utilisé. L'axe optique est généralement une ligne brisée. La droite 5 supporte une partie de l'axe optique. Le plus souvent, l'image est présentée droit devant l'utilisateur, la droite 5 est alors sensiblement normale au visage de l'utilisateur, mais l'image peut être par exemple présentée en haut du champ de vision de repos à l'infini de l'utilisateur et la droite 5 est alors orientée dans la direction correspondante.

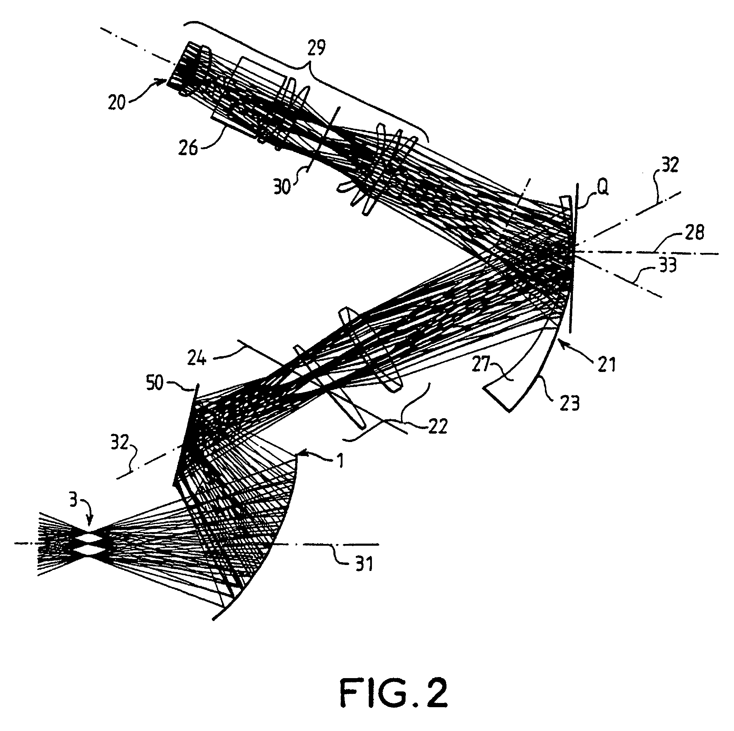

Sur la figure 2, des trajets de rayons lumineux à l'intérieur d'une réalisation d'un dispositif selon l'invention sont représentés.

Dans cette réalisation, l'imageur, non représenté, comporte un écran comme par exemple l'écran d'un tube cathodique ou un écran à cristaux liquides. L'écran peut aussi être réalisé par exemple par une section de faisceau de fibres optiques ou une diapositive ou l'écran d'un tube intensificateur de lumière. Une image dont la surface est quelconque est affichée sur l'écran de l'imageur représenté par son plan tangent 20. L'image peut être sphérique, elle peut aussi bien être plane. Le trajet des rayons lumineux de l'écran de l'imageur jusqu'à l'oeil 3 de l'utilisateur sont tracés pour cette réalisation de l'invention.

Le dispositif comprend un miroir sphérique 1 hors axe. Le dispositif comprend de plus un miroir concave de type MANGIN 21.

Les rayons lumineux issus de l'écran 20 de l'imageur frappent le miroir de type MANGIN 21. Un tel miroir présente une surface réfléchissante 23 concave, et une couche de matériau réfractant 27. Les rayons lumineux issus de l'imageur traversent d'abord le matériau réfractant puis sont réfléchis sur la surface réféchissante avant de traverser une seconde fois le matériau réfractant.

Les rayons lumineux réfléchis par le miroir de type MANGIN 21 traversent un groupe de puissance 22 avant de frapper le miroir sphérique 1 hors axe qui assure une collimation de l'image reçue par l'oeil 3 de l'utilisateur.

On observe maintenant le trajet des rayons lumineux dans l'autre sens c'est-à-dire en partant de l'oeil 3 de l'utilisateur et en remontant les différents éléments optiques vers l'écran de l'afficheur.

Les rayons issus de l'oeil sont réfléchis sur le miroir sphérique 1 hors axe. L'axe optique qui, dans l'exemple de la figure 2, est horizontal sur une première partie 31 entre le centre de la pupille de l'oeil 3 et le miroir sphérique 1 est également réfléchi sur le miroir sphérique 1.

Cette partie 31 de l'axe optique et sa reflexion sur le miroir sphérique 1 définissent un plan nommé plan d'incidence P de l'axe optique sur le miroir sphérique 1 hors axe.

Dans l'exemple de la figure 2, le plan d'incidence est confondu avec le plan P de symétrie de l'optique qui est représenté par le plan de la figure 2. Le plan de symétrie de l'optique est un plan contenant le trajet décrit par l'axe optique entre l'imageur et la pupille de l'utilisateur. Mais une réalisation de l'invention n'est pas limitée à une optique dans ce plan P ; dans le cadre de l'invention, il est toujours possible d'ajouter des miroirs plans supplémentaires permettant de sortir des éléments optiques en dehors du plan P. En effet les miroirs plans, également appelés miroirs de pliage, ne modifient pas la fonction optique, ils n'apportent pas et ne corrigent pas d'aberration mais ils permettent aux rayons optiques de contourner des obstacles comme la tête de l'utilisateur.

Les rayons réfléchis frappent, dans cet exemple de réalisation, un miroir plan 50 qui permet le pliage des rayons optiques en respectant le plan d'incidence de l'axe optique sur le miroir sphérique 1. L'invention peut être réalisée sans ce miroir plan 50. Après réflexion sur le miroir plan 50, l'axe optique est orienté selon une droite 32 du plan d'incidence.

Sur cette seconde partie 32 de l'axe optique, on observe une première image pupillaire 24 qui est l'image de la pupille de l'oeil 3 donnée par le miroir shérique 1 hors axe.

La normale 25 au plan tangent à cette première image pupillaire 24 n'est pas parallèle à la section correspondante 32 de l'axe optique. La première image pupillaire 24 est inclinée sur l'axe optique.

Un groupe de puissance 22 est placé par exemple de façon à ce que la première image pupillaire 24 soit sur le trajet des rayons lumineux entre le miroir sphérique 1 et le groupe de puissance 22.

La première image pupillaire 24 est d'un côté du groupe de puissance 22 et le miroir de type MANGIN 21 est de l'autre côté. Le miroir concave de type MANGIN 21 est sur le trajet des rayons qui viennent de la pupille de l'oeil 3 - car la description est ici écrite en remontant le trajet réél des rayons lumineux issus de l'écran de l'imageur- et réfléchir ces rayons vers l'écran 20 de l'imageur. Le plan P de la figure 2 est aussi le plan d'incidence de l'axe optique sur le miroir de type MANGIN 21.

En sortant du miroir 21 et en direction de l'écran de l'imageur 20, l'axe optique est aligné avec une droite 33 matérialisant une troisième partie de l'axe optique.

La partie utile du miroir de type MANGIN 21 présente un plan tangent Q dont la normale 28, appartenant au plan d'incidence P, n'est pas parallèle à la troisième partie 33 de l'axe optique. Le miroir de type MANGIN 21 est incliné par rapport à l'axe optique, il est dit hors axe.

Un miroir MANGIN est un ménisque présentant une surface réfléchissante et une surface réfractante.

Dans cette première réalisation de l'invention, le miroir de type MANGIN présente une structure simple proche d'un miroir de MANGIN. Sa surface réfractante, supportée par une sphère, est facilement réalisable dans du verre optique d'indice constant. Sa surface réfléchissante est une surface asphérique présentant une symétrie de révolution afin de faciliter la réalisation de l'élément optique de type MANGIN et d'en limiter le coût de fabrication.

Cette surface est par exemple la surface engendrée par le mouvement de rotation d'un arc de cercle appartenant au plan P autour d'un axe de révolution appartenant également au plan P. Ainsi dans le plan d'incidence P contenant les deux parties décrites 31, 32 de l'axe optique, le miroir de type MANGIN 21 présente un rayon de courbure constant.

On considère un plan R perpendiculaire au plan d'incidence P et au plan tangent Q; le plan R est perpendiculaire à l'axe de révolution. Dans cette première réalisation, la courbure de la face réfléchissante du miroir de type MANGIN 21 est aussi constante dans le plan R mais elle est différente de la courbure dans le plan P. Ce miroir 21 est une lentille sphéro-torique dont la surface asphérique est traitée pour être réfléchissante.

Les courbures définissant la lentille sphéro-torique permettent une correction fine de la distorsion due au miroir sphérique 1 tout en conservant un bon piqué de l'image collimatée.

Les courbures de la surface réfléchissante permettent de redresser l'image pour corriger la distorsion.

L'épaisseur du miroir de type MANGIN permet de compenser l'astigmatisme introduit par la correction poussée de la distorsion au moyen de la surface asphérique réfléchissante.

Dans des variantes de réalisation la surface asphérique de ce miroir 21 présente un rayon de courbure variable dans le plan d'incidence P. Ces variantes, plus difficiles à réaliser, permettent une correction de la distorsion avec une résolution plus fine (ou une meilleure correction de la distorsion pour une même résolution).

Dans une de ces variantes, l'intersection de la surface ashérique avec le plan P est une parabole. La surface peut même être supportée par un paraboloïde de révolution.

Dans une autre variante de réalisation, l'intersection de la surface asphérique avec le plan P est une ellipse non dégénérée (c'est-à-dire une ellipse dont le rayon de courbure n'est pas constant).

Dans une autre variante, la surface asphérique décrit une partie d'un ellipsoïde, lequel peut présenter une symétrie de révolution.

Dans la première réalisation de l'invention représentée sur la figure 2, des contraintes d'encombrement sur l'ensemble de l'optique conduisent à minimiser l'enveloppe du faisceau de rayons optiques d'une part et à prévoir des espaces pour ajouter des miroirs de pliage d'autre part. L'ensemble de l'optique peut alors par exemple épouser la forme du crâne de l'utilisateur.

La puissance optique du miroir 21 choisie pour cette réalisation permet de limiter au voisinage du miroir de type MANGIN le volume du faisceau des rayons venant de l'imageur 20.

Et le groupe de puissance 22 tend à restreindre la surface du miroir de type MANGIN 21.

On note qu'en l'absence de contraintes d'encombrement, un dispositif très performant en termes de résolution et de correction de distorsion comporterait une surface utile du miroir 21 supérieure d'environ 50 % et un facteur de grandissement de la conjugaison pupillaire du miroir 21 voisin du double de l'unité.

Dans la réalisation de la figure 2, le facteur de grandissement des images pupillaires conjuguées par le miroir de type MANGIN est maintenu voisin de l'unité.

La réalisation de la figure 2 comporte de plus une optique de relais 29 pour satisfaire aux contraintes d'encombrement de l'optique et de l'imageur, et pour adapter l'agrandissement de l'image affichée sur l'écran 20 pour la présentation à l'utilisateur.

L'optique de relais 29 est placée entre l'écran de l'imageur 20 et le miroir de type MANGIN 21. Un tirage suffisant est laissé entre le miroir de type MANGIN 21 et la première lentille du groupe 29 pour plier le système grâce à un miroir plan.

L'optique de relais 29 est sensiblement alignée avec la troisième partie 33 de l'axe optique.

Sur cette troisième partie 33 de l'axe optique, on observe une seconde image pupillaire 30 située entre le miroir de type MANGIN 21 et l'imageur 20.

L'image pupillaire 30 présente un plan tangent qui est sensiblement normal à l'axe optique 33 : c'est une correction apportée par le miroir asphérique 21. En effet, la première image 24 de la pupille de l'oeil formée par le miroir sphérique 1 est inclinée par rapport à l'axe optique local 32 et correspond aux aberrations induites par ce miroir 1 ; et la seconde image pupillaire 30 est redressée par rapport à l'axe optique 33 par le miroir asphérique 21, elle est sensiblement perpendiculaire à l'axe optique 33.

Sur la figure 2, un cube optique 26 est placé dans l'optique de relais 29 pour permettre de mélanger l'image de l'écran de l'imageur 20 avec une image d'un second imageur (non représenté). Ce cube 26 permet par exemple la superposition d'une image de symboles issue de l'écran 20 et d'une image du paysage nocturne issue de l'écran d'un intensificateur de lumière.

La première réalisation décrite de l'invention est illustrée par la figure 2, le miroir de type MANGIN 21 présente une surface réfractante sphérique et une surface réfléchissante asphérique.

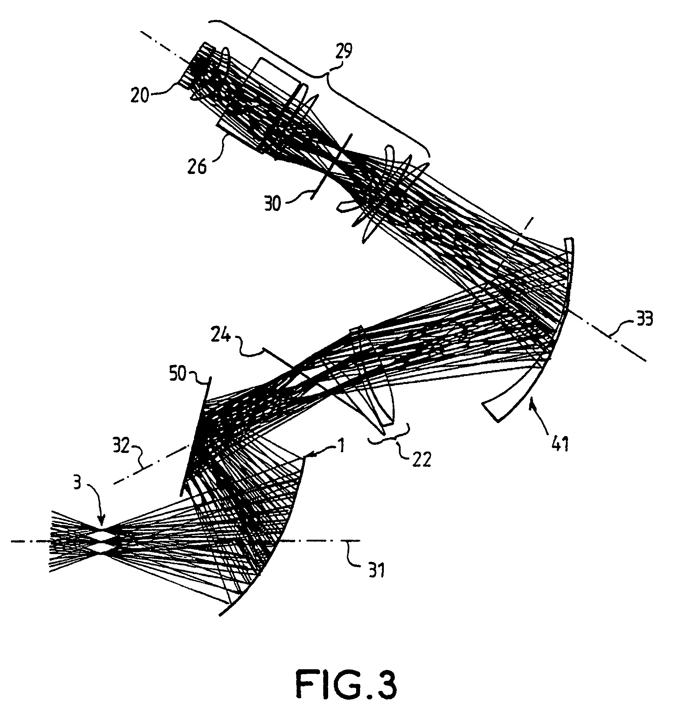

Cependant pour des questions de réalisation pratique on lui préférera une seconde réalisation illustrée par la figure 3 où le miroir de type MANGIN 41, incliné sur l'axe optique local, présente une surface réfractante asphérique et une surface réfléchissante sphérique.

En effet la surface asphérique est plus délicate à réaliser que la surface sphérique et les imperfections de la surface réfractante sont moins pénalisantes que celles de la surface réfléchissante pour le miroir de type MANGIN.

Plus précisément, la surface réfractante du miroir 41 de la figure 3 est un tore.

Des variantes de cette seconde réalisation comportent une surface asphérique distincte du tore comme par exemple les surfaces asphériques décrites dans la première réalisation de l'invention.

Pour permettre une correction plus poussée de la distorsion avec une bonne résolution une troisième réalisation comporte un miroir de type MANGIN dont les deux surfaces sont asphériques.

Le choix des deux surfaces permet une bonne correction de la distorsion associée à une bonne résolution (ou bon piqué) de l'image.

La qualité de l'image présentée à l'utilisateur qui est estimée par sa résolution et sa distorsion résiduelle, est alors améliorée au prix d'une réalisation de surfaces plus complexes pour le miroir de type MANGIN.

Une troisième réalisation - non illustrée - de l'invention comporte un miroir de type MANGIN dont le matériau réfractant présente un indice optique variable selon la position sur la surface du miroir.

Le miroir sphérique 1 hors axe peut être semi-transparent, dans ce cas, les rayons lumineux émis par le paysage ou l'environnement dans le champ de vue de l'utilisateur sont transmis par ce miroir et sont reçus par la pupille de l'oeil simultanément avec les rayons réfléchis par ce même miroir et précédemment décrits. Le miroir semi-transparent est un combineur. C'est donc un combineur sphérique utilisé hors axe.

Le combineur fait de préférence partie d'une visière de protection des yeux et même du visage de l'utilisateur.

Une visière selon l'invention présente au moins une partie réfléchissante hors axe. En position d'utilisation la visière est rabattue de façon à ce que la partie correspondant au miroir de collimation soit placée devant l'oeil de l'utilisateur. L'ensemble du dispositif de présentation d'images collimatées 20, 21, 22, 1 peut être intégré à un casque par exemple pour un pilote d'avion ou d'hélicoptère et permet de réaliser un viseur de casque.

Le viseur peut être monoculaire s'il présente l'image collimatée à un seul oeil.

Le viseur peut être binoculaire s'il comporte la présentation d'une image pour chaque oeil. Il présente l'avantage de permettre une vision agréable lorsque le recouvrement des champs de vue des deux images est total.

Un viseur binoculaire peut également présenter un recouvrement partiel des deux champs de vue ce qui permet pour un même dimensionnement des optiques d'obtenir un champ de vue plus large sans trop dégrader la perception des informations présentées.

La distorsion d'une image présentant un quadrillage conduit à la déformation du quadrillage. Les images présentées à l'utilisateur et dont la distorsion inhérente à la visière concave hors axe est corrigée sont particulièrement avantageuses pour un viseur de casque car elles respectent les dimensions réelles des objets représentés. Ce qui est primordial lorsque le viseur présente une image superposée à la vue directe et l'est encore plus lorsque l'image présentée se substitue à la vue directe pour l'utilisateur par exemple dans le cas d'une vision nocturne assistée par un intensificateur d'image, d'une vision infrarouge ou d'un simulateur d'entraînement.

## Revendications

1. Dispositif optique pour système de présentation d'images collimatées à travers la pupille de l'oeil (3) d'un utilisateur, comportant un imageur (20), un miroir concave (1) hors axe et un miroir de Mangin (21), le trajet du rayon passant par le centre de la pupille de l'oeil (3) et le centre de l'imageur (20) formant un axe optique en ligne brisée (31, 32), **caractérisé en ce que** ledit miroir concave (1) est incliné par rapport à une première partie (31) de l'axe optique entre ledit centre de la pupille et ledit miroir concave (1), et **en ce que** ledit miroir de Mangin (21) est incliné sur une seconde partie de l'axe optique (32) correspondant à la réflexion de la première partie (31) de l'axe optique sur le miroir concave (1) et comporte une première surface (23) réfléchissante et une couche (27) de matériau réfractant, définissant une seconde surface réfractante, ladite surface réfléchissante permettant la correction de la distorsion de l'image présentée à l'utilisateur et due au miroir concave hors axe (1), et l'épaisseur optique de la couche entre les deux surfaces étant variable sur la surface du miroir de telle sorte à compenser la dégradation de la résolution introduite par ladite surface réfléchissante (23).

2. Dispositif selon la revendication 1, **caractérisé en ce que** l'épaisseur de la couche entre les deux surfaces n'est pas constante.

3. Dispositif selon la revendication 2, **caractérisé en ce que** les surfaces réfractante et réfléchissante du miroir de type MANGIN (21) sont asphériques.

4. Dispositif selon la revendication 2, **caractérisé en ce que** ie miroir de type MANGIN (21) présente une surface réfractante sphérique et une surface réfléchissante asphérique.

5. Dispositif selon la revendication 2, **caractérisé en ce que** le miroir de type MANGIN (21) présente une surface réfractante asphérique et une surface réfléchissante sphérique.

6. Dispositif selon l'une des revendications 3, 4 et 5, **caractérisé en ce qu'**au moins une surface asphérique du miroir de type MANGIN (21) est un tore.

7. Dispositif selon l'une des revendications 3, 4 et 5, **caractérisé en ce que** le miroir de type MANGIN (21) présente deux courbes d'intersection avec le plan d'incidence de l'axe optique (33) et qu'au moins une de ces courbes présente une courbure variable.

8. Dispositif selon la revendication 7, **caractérisé en ce que** la courbe présentant une courbure variable est une parabole ou une ellipse.

9. Dispositif selon l'une des revendications 3, 4 et 5, **caractérisé en ce qu'**au moins une surface asphérique du miroir de type MANGIN (21) est supportée par un paraboloïde.

10. Dispositif selon l'une des revendications 3, 4 et 5, **caractérisé en ce qu'**au moins une surface asphérique du miroir de type MANGIN (21) est supportée par un ellipsoïde.

11. Dispositif selon l'une des revendications précédentes, **caractérisé en ce que** le matériau réfractant présente un indice optique variable avec la position sur la surface du miroir de type MANGIN.

12. Dispositif selon l'une des revendications précédentes, **caractérisé en ce que** le dispositif comporte un groupe de puissance (22) placé entre les miroirs concave (1) et de type MANGIN (21).

13. Dispositif selon l'une des revendications précédentes, **caractérisé en ce que** le miroir concave (1) est sphérique et incliné par rapport à la direction d'observation.

14. Dispositif selon l'une des revendications précédentes, **caractérisé en ce que** le miroir concave (1) est semi-transparent.

15. Dispositif selon l'une des revendications précédentes, **caractérisé en ce que** le système de présentation d'images collimatées est un viseur de casque

## Claims

1. Optical device for a system for the presentation of collimated images through the pupil of the eye (3) of a user comprising an imager (20), an off-axis concave mirror (1) and a Mangin mirror (21), the path of the ray passing through the centre of the pupil of the eye (3) and the centre of the imager (20) forming a broken-line optical axis (31, 32), wherein the said concave mirror (1) is inclined with respect to a first part (31) of the optical axis between the said centre of the pupil and the said concave mirror (1), and in that the said Mangin mirror (21) is inclined on a second part of the optical axis (32) corresponding to the reflection of the first part (31) of the optical axis on the concave mirror (1) and comprises a first reflecting surface (23) and a layer (27) of refracting material, defining a second refracting surface, the said reflecting surface allowing the correction of the distortion of the image presented to the user and due to the off-axis concave mirror (1), and the optical thickness of the layer between the two surfaces being variable over the surface of the mirror in such a way as to compensate for the degradation in the resolution introduced by the said reflecting surface (23).

2. Device according to Claim 1, wherein the thickness of the layer between the two surfaces is not constant.

3. Device according to Claim 2, wherein the refracting and reflecting surfaces of the Mangin type mirror (21) are aspherical.

4. Device according to Claim 2, wherein the Mangin type mirror (21) has a spherical refracting surface and an aspherical reflecting surface.

5. Device according to Claim 2, wherein the Mangin type mirror (21) has an aspherical refracting surface and a spherical reflecting surface.

6. Device according to one of Claims 3, 4 and 5, wherein at least one aspherical surface of the Mangin type mirror (21) is a torus.

7. Device according to one of Claims 3, 4 and 5, wherein the Mangin type mirror (21) has two curves of intersection with the plane of incidence of the optical axis (33) and in that at least one of these curves has a variable curvature.

8. Device according to Claim 7, wherein the curve having a variable curvature is a parabola or an ellipse.

9. Device according to one of Claims 3, 4 and 5, wherein at least one aspherical surface of the Mangin type mirror (21) is supported by a paraboloid.

10. Device according to one of Claims 3, 4 and 5, wherein at least one aspherical surface of the Mangin type mirror (21) is supported by an ellipsoid.

11. Device according to one of the preceding claims, wherein the refracting material has an optical index that is variable with the position on the surface of the Mangin type mirror.

12. Device according to one of the preceding claims, wherein the device comprises a power unit (22) placed between the concave mirror (1) and the Mangin type mirror (21).

13. Device according to one of the preceding claims, wherein the concave mirror (1) is spherical and inclined with respect to the direction of observation.

14. Device according to one of the preceding claims, wherein the concave mirror (1) is semi-transparent.

15. Device according to one of the preceding claims, wherein the system for the presentation of collimated images is a helmet viewfinder.

## Patentansprüche

1. Optische Vorrichtung für ein System zur Darstellung von kollimierten Bildern durch die Pupille des Auges (3) eines Benutzers, mit einem Bildgerät (20), einem konkaven Spiegel (1), der außerhalb der Achse liegt, und einem Mangin-Spiegel (21), wobei der durch die Mitte der Pupille des Auges (3) und die Mitte des Bildgeräts (20) verlaufende Strahlenweg eine optische Achse (31, 32) in gestrichelter Linie bildet, **dadurch gekennzeichnet, daß** der konkave Spiegel (1) bezüglich eines ersten Abschnittes (31) der optischen Achse zwischen dem Mittelpunkt der Pupille und dem konkaven Spiegel (1) geneigt ist und daß der Mangin-Spiegel (21) auf einem zweiten Abschnitt (32) der optischen Achse geneigt ist, entsprechend der Reflexion vom ersten Abschnitt (31) der optischen Achse auf den konkaven Spiegel (1), und eine reflektierende erste Fläche (23) aufweist sowie eine Schicht (27) aus brechendem Material, die eine brechende zweite Fläche bildet, wobei die reflektierende Fläche die Korrektur der Verzerrung des dem Benutzer dargebotenen Bildes, die auf den außerhalb der Achse liegenden, konkaven Spiegel (1) zurückgeht, ermöglicht, wobei die optische Dicke der Schicht zwischen den beiden Flächen auf der Fläche des Spiegels derart variabel ist, daß die Verschlechterung der Auflösung kompensiert wird, die von der reflektierenden Fläche (23) hervorgerufen wird.

2. Vorrichtung nach Anspruch 1, **dadurch gekennzeichnet, daß** die Dicke der Schicht zwischen den beiden Flächen nicht konstant ist.

3. Vorrichtung nach Anspruch 2, **dadurch gekennzeichnet, daß** die brechende Fläche und die reflektierende Fläche des Mangin-Spiegels (21) asphärisch sind.

4. Vorrichtung nach Anspruch 2, **dadurch gekennzeichnet, daß** der Mangin-Spiegel (21) eine sphärische brechende Fläche und eine asphärische reflektierende Fläche aufweist.

5. Vorrichtung nach Anspruch 2, **dadurch gekennzeichnet, daß** der Mangin-Spiegel (21) eine asphärische brechende Fläche und eine sphärische reflektierende Fläche aufweist.

6. Vorrichtung nach einem der Ansprüche 3 bis 5, **dadurch gekennzeichnet, daß** wenigstens eine asphärische Fläche des Mangin-Spiegels (21) ein Torus ist.

7. Vorrichtung nach einem der Ansprüche 3 bis 5, **dadurch gekennzeichnet, daß** der Mangin-Spiegel (21) zwei Schnittkurven mit der Einfallsebene der optischen Achse (33) aufweist und daß wenigstens eine der beiden Kurven eine variable Krümmung aufweist.

8. Vorrichtung nach Anspruch 7, **dadurch gekennzeichnet, daß** die Kurve mit variabler Krümmung eine Parabel oder eine Ellipse ist.

9. Vorrichtung nach einem der Ansprüche 3 bis 5, **dadurch gekennzeichnet, daß** wenigstens eine asphärische Fläche des Mangin-Spiegels (21) von einem Paraboloid getragen ist.

10. Vorrichtung nach einem der Ansprüche 3 bis 5, **dadurch gekennzeichnet, daß** wenigstens eine asphärische Fläche des Mangin-Spiegels (21) von einem Ellipsoid getragen ist.

11. Vorrichtung nach einem der vorhergehenden Ansprüche, **dadurch gekennzeichnet, daß** das brechende Material einen Brechungsindex aufweist, der sich mit der Position auf der Fläche des Mangin-Spiegels ändert.

12. Vorrichtung nach einem der vorhergehenden Ansprüche, **dadurch gekennzeichnet, daß** eine Gruppe (22) mit Brechkraft zwischen dem konkaven Spiegel (1) und dem Mangin-Spiegel (21) angeordnet ist.

13. Vorrichtung nach einem der vorhergehenden Ansprüche, **dadurch gekennzeichnet, daß** der konkave Spiegel (1) sphärisch und bezüglich der Betrachtungsrichtung geneigt ist.

14. Vorrichtung nach einem der vorhergehenden Ansprüche, **dadurch gekennzeichnet, daß** der konkave Spiegel (1) halbdurchlässig ist.

15. Vorrichtung nach einem der vorhergehenden Ansprüche, **dadurch gekennzeichnet, daß** das System zur Darstellung von kollimierten Bildern ein Helmvisier ist.
